# DEMANDE DE BREVET EUROPEEN

(11) **EP 1 532 938 A1**
(43) Date de publication de la demande: **25.05.2005**
(21) Numéro de dépôt: 04022916.3
(22) Date de dépôt: 27.09.2004
(51) Int. Cl.: A61C 8/00

(54) **Système de prise d'empreinte en bouche pour moignon d'implant dentaire**

(30) Priorité: 03.10.2003 FR 0311628
(71) Demandeur: Societe d'Etudes, de Recherches et de Fabrication - S.E.R.F., 69150 Decines (FR); Leclerq, Philippe, 75017 Paris (FR); Fromental, Robert, 69006 Lyon (FR); Brun, Jean-Pierre, 38320 Eybens (FR)
(72) Inventeur: Delanoue, Elisabeth, 69003 Lyon (FR); Leclercq, Philippe, 75017 Paris (FR); Fromental, Robert, 69006 Lyon (FR); Brun, Jean-Pierre, 38320 Eybens (FR)
(74) Mandataire: Maureau, Philippe

(57) **Abrégé**

Ce système comprend une pièce tubulaire (7) de hauteur au moins égale à la hauteur de la partie du moignon (5) dépassant de la partie de l'implant (2) fixée dans l'os de la mâchoire, et dont une extrémité (8) est conformée pour s'adapter à la base (6) de la partie du moignon dépassant de l'implant, et dont l'autre extrémité, ouverte, est destinée à recevoir une pièce (10) en forme de piston pouvant être engagée par coulissement dans la pièce tubulaire (7), cette dernière comportant, dans sa paroi périphérique au moins un trou d'évent (13).

## Description

La présente invention a pour objet un système de prise d'empreinte en bouche pour moignon d'implant dentaire.

Un implant dentaire comprend une première partie tubulaire qui est ancrée dans l'os et dans la partie centrale de laquelle vient se fixer, généralement par vissage direct ou à travers une vis de fixation indépendante, un moignon sur lequel est destinée à venir s'adapter une coiffe reproduisant la forme de la dent à remplacer.

La présente invention vise plus spécialement un système permettant le travail en bouche, c'est-à-dire permettant de faire la prise d'empreinte en bouche sur le moignon après fixation de celui-ci dans l'implant dentaire.

Une première difficulté rencontrée est que la gencive vient encombrer la base du moignon et que l'empreinte est peu précise. Le premier problème est donc d'écarter le tour du moignon emprisonné par la base de la gencive, afin de réaliser une empreinte qui soit la plus précise sur toute la hauteur du moignon. De façon connue, une pièce tubulaire est positionnée autour du moignon, dont l'extrémité inférieure vient prendre appui sur la base du moignon. La face interne de cette jupe délimite avec le moignon, un volume qui est rempli d'une pâte d'empreinte. Cette pâte est injectée par un trou qui est ménagé dans la face supérieure de la paroi obturant la pièce tubulaire. L'injection peut également être réalisée dans la paroi latérale de la pièce. La mise en oeuvre d'une telle technique est délicate à réaliser dans la bouche du patient et le remplissage de l'espace entre la pièce tubulaire et le moignon n'est pas assuré, de telle sorte que l'empreinte prise ne correspond pas toujours parfaitement à la forme du moignon.

L'invention concerne un système permettant d'assurer une parfaite prise d'empreinte de la forme d'un moignon retouché ou non retouché.

A cet effet, le système qu'elle concerne comprend une pièce tubulaire de hauteur au moins égale à la hauteur de la partie du moignon dépassant de la partie de l'implant fixée dans l'os de la mâchoire, et dont une extrémité est conformée pour s'adapter à la base de la partie du moignon dépassant de l'implant, et dont l'autre extrémité, ouverte, est destinée à recevoir une pièce en forme de piston pouvant être engagée par coulissement dans la pièce tubulaire, cette dernière comportant, dans sa paroi périphérique au moins un trou d'évent.

Le praticien placé du matériau de prise d'empreinte à l'intérieur de la pièce tubulaire, le piston étant en position retirée mais obturant néanmoins l'extrémité ouverte de la pièce tubulaire. Le praticien peut également déposer un peu de matériau de prise d'empreinte sur le moignon. La pièce tubulaire est ensuite engagée sur le moignon jusqu'à ce que son extrémité ouverte vienne s'adapter sur la base de la partie du moignon dépassant de l'implant. Au cours de ce mouvement, il se produit déjà une compression du matériau de prise d'empreinte contenu dans la pièce tubulaire provoquant l'échappement de l'excédent par les trous d'évent. Lorsque la pièce tubulaire est parfaitement placée sur la base du moignon, après avoir écarté la gencive, le praticien exerce une pression sur le piston, pour comprimer le volume délimité entre la pièce tubulaire et le moignon, et forcer le matériau de prise d'empreinte à épouser intimement la surface du moignon. Au cours de cette opération, l'excédent de matériau de prise d'empreinte s'échappe par les évents.

Après un temps de séchage suffisant, la pièce tubulaire est retirée, le matériau de prise d'empreinte reproduisant alors la forme de la surface extérieure du moignon.

Avantageusement, afin d'assurer un bon enrobage du moignon, la pièce tubulaire comprend plusieurs trous d'évent dont certains sont décalés axialement et certains trous d'évent sont situés au-delà du moignon et d'autres sont situés au niveau du moignon, au cours de la prise d'empreinte.

Suivant une autre caractéristique de l'invention, le piston et l'extrémité de la pièce tubulaire permettant l'engagement de celui-ci comportant des moyens complémentaires, par exemple un système de nervures-rainures, permettant un blocage axial du piston vis-à-vis de la pièce tubulaire, respectivement en début et en fin d'introduction du piston dans la pièce tubulaire.

Il est en effet avantageux que le piston puisse être maintenu dans ces deux positions d'extrémités, d'une part pour faciliter la mise en place de la pièce tubulaire sur le moignon sans risque de déplacement du piston et d'autre part pour permettre le maintien du piston en position enfoncée sans crainte de voir celui-ci reculer, en fin d'opération.

Suivant une autre caractéristique de l'invention, l'extrémité de la pièce tubulaire est destinée à venir s'adapter à la base du moignon et la pièce tubulaire est munie de moyens de fixation par clipage sur le moignon.

Il est en effet particulièrement utile que la pièce tubulaire soit parfaitement fixée sur le moignon afin d'éviter que celle-ci ne s'échappe du moignon lorsqu'une pression est exercée sur le matériau de prise d'empreinte.

En outre, et afin de permettre de travailler sur différents types de moignons la hauteur de la pièce tubulaire est au moins égale à la hauteur de la partie du moignon dépassant de la partie de l'implant fixée dans l'os augmentée de la course du piston.

Selon une autre caractéristique de l'invention, la pièce tubulaire est réalisée en un matériau sur lequel n'adhère pas le matériau de prise d'empreinte, notamment en poly-méthyl-métacrylate si le matériau de prise d'empreinte est à base de silicone.

De toute façon l'invention sera bien comprise à l'aide de la description qui suit, en référence au dessin schématique annexé représentant, à titre d'exemple non limitatif une forme d'exécution de ce système.

Figure 1 est une vue en perspective des différentes pièces consécutives de ce système en position éclatée.

Figure 2 est une vue en coupe longitudinale montrant le système de prise d'empreinte positionné au dessus d'un moignon retouché. Figure 3 à 6 sont quatre vues en coupe longitudinales représentant quatre séquences de la prise d'empreinte.

Figure 7 est une vue en coupe longitudinale similaire à la vue de figure 2 représentant le système de prise d'empreinte positionné au-dessus d'un moignon non retouché.

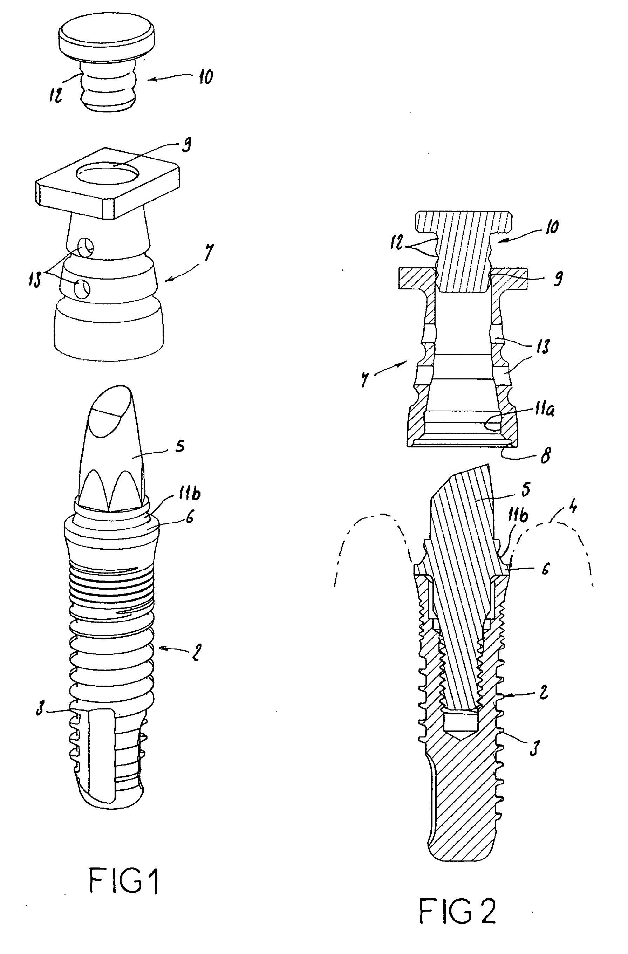

La figure 1 représente, vu en perspective éclatée, un implant comportant une partie 2 présentant un filetage 3, destinée à venir se fixer par vissage dans l'os de la mâchoire. Cette partie d'implant 2 est recouverte par la gencive 4. Cette partie d'implant 2 est destinée à recevoir un moignon 5 fixé par vissage dans une cavité centrale de la partie d'implant 2. Au niveau de la partie extérieure de l'implant 2, le moignon comporte une base 6 en forme de collerette recouvrant la périphérie de cette partie.

Le système de prise d'empreinte selon l'invention comprend une pièce tubulaire 7 destinée à venir s'engager sur le moignon 5, dont une extrémité est munie d'une collerette 8 d'appui sur la base du moignon 6.

La pièce tubulaire 7 comprend également des moyens de clipage ou encliquetage sur le moignon 5, constitués par une nervure 11a destinée à venir s'engager dans une rainure 11 b du moignon 5.

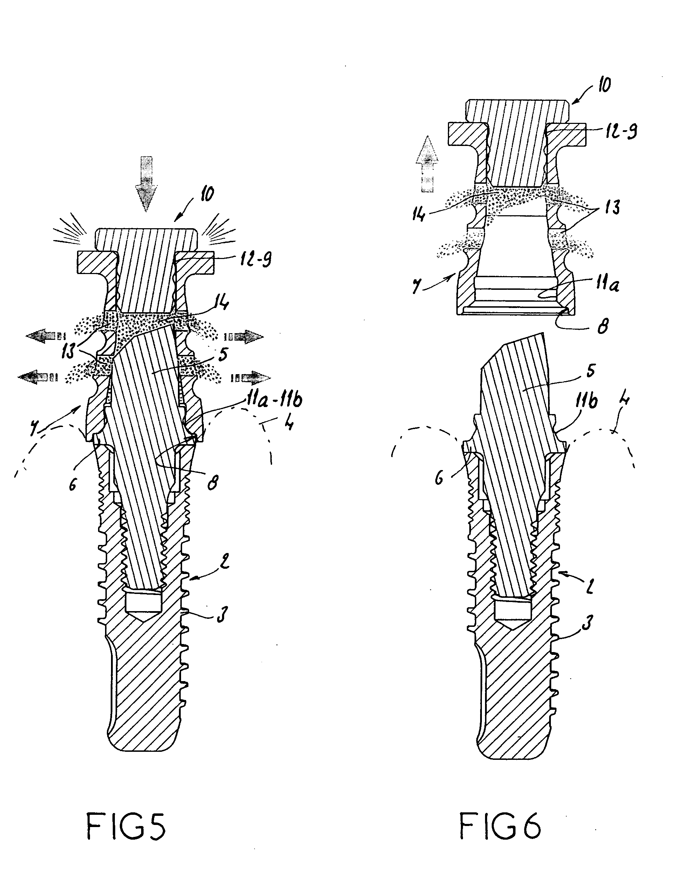

L'autre extrémité de la pièce tubulaire 7 est ouverte, et son entrée délimitée par une nervure périphérique 9. Cette extrémité sert à l'engagement d'un piston 10 comportant deux rainures annulaires 12 décalées axialement permettant pour la première le maintien du piston en position retirée, comme montré aux figures 2, 3, 4 et pour la seconde, le maintien du piston en position engagée dans la pièce tubulaire comme montré aux figures 5 et 6. La pièce tubulaire présente en outre deux paires de trous d'évent 13 décalées axialement l'une par rapport à l'autre de telle sorte qu'en position montée de la pièce tubulaire 7 sur le moignon 5, une paire de trous 13 se trouve en regard du moignon et l'autre paire se trouve entre le moignon et le piston.

### L'utilisation du système est la suivante :

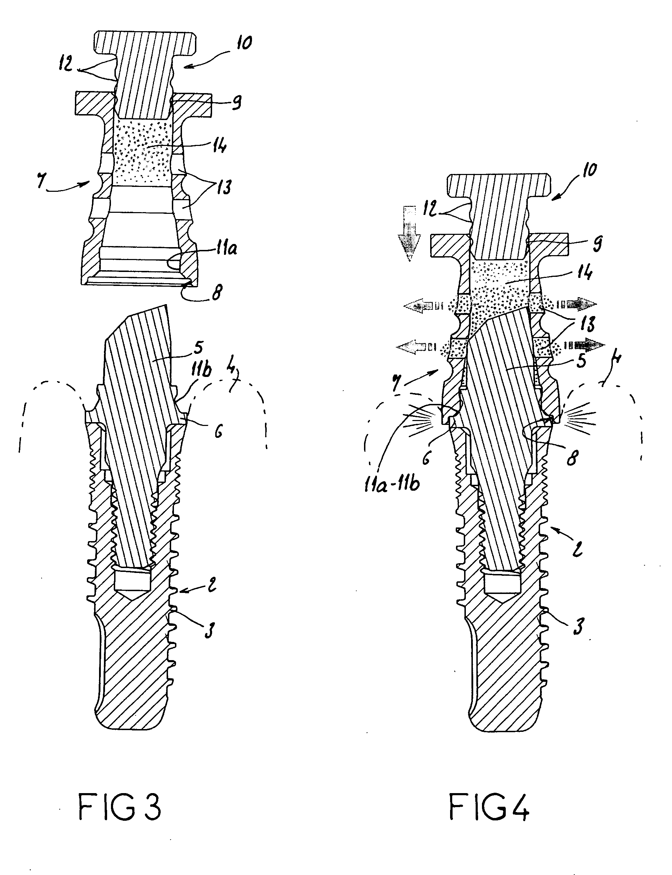

Le praticien place du matériau de prise d'empreinte 14, par exemple à base de silicone, dans la pièce tubulaire 7. Le praticien peut également placer une certaine quantité de ce matériau sur le moignon 5. La pièce tubulaire est alors engagée sur le moignon, comme montré à la figure 4, jusqu'à réaliser l'encliquetage de la pièce tubulaire avec appui de son extrémité 8 sur la base 6 du moignon. Au cours de ce mouvement, du matériau de prise d'empreinte se trouve comprimé et peut s'échapper par les trous d'évent 13, comme montré à la figure 4. Lorsque la pièce tubulaire 7 est parfaitement positionnée sur le moignon, le praticien exerce une pression sur le piston 10, pour amener celui-ci en position d'enfoncement complet dans la pièce tubulaire. Au cours de ce mouvement, le matériau de prise d'empreinte 14 est comprimé, et épouse intimement la surface extérieure du moignon, l'excédent de matière s'échappant par les trous d'évent 13. Après séchage du matériau de prise d'empreinte, la pièce tubulaire est retirée, comme montré à la figure 6, le matériau de prise d'empreinte fournissant alors la forme de l'extérieur du moignon.

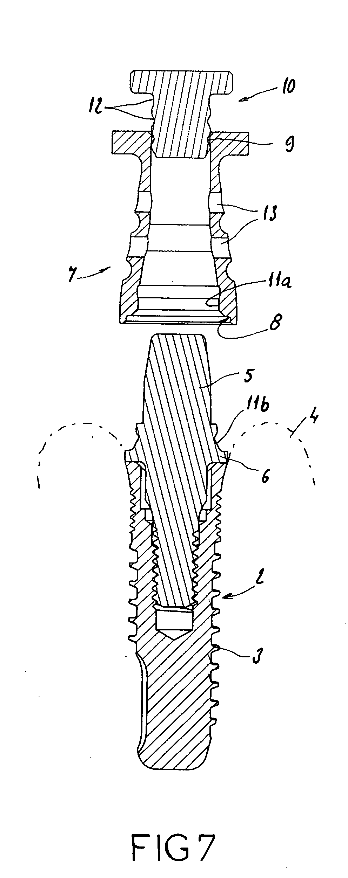

La figure 7 représente le même système destiné à être monté sur un moignon non retouché.

Comme il ressort de ce qui précède l'invention apporte une grande amélioration à la technique existante en fournissant un système de prise d'empreinte en bouche de structure simple, et permettant la réalisation d'une empreinte parfaite du moignon.

Comme il va de soi l'invention ne se limite pas à la seule forme d'exécution de ce système, décrite ci-dessus à titre d'exemple, et en embrasse au contraire toutes les variantes.

C'est ainsi notamment que le nombre de trous d'évent ou que les moyens de blocage du piston pourraient être différents sans que l'on sorte pour autant du cadre de l'invention.

## Revendications

1. Système de prise d'empreinte en bouche pour moignon d'implant dentaire comprenant une pièce tubulaire (7) de hauteur au moins égale à la hauteur de la partie du moignon (5) dépassant de la partie de l'implant (2) fixée dans l'os de la mâchoire, qui comporte dans sa paroi périphérique au moins un trou d'évent (13), et dont une extrémité (8) est conformée pour s'adapter à la base (6) de la partie du moignon dépassant de l'implant, **caractérisé en ce qu'**il comprend une pièce (10) en forme de piston, destinée à être engagée par coulissement dans la pièce tubulaire (7) à partir de son autre extrémité.

2. Système de prise d'empreinte selon la revendication 1, **caractérisé en ce que** la pièce tubulaire (7) comprend plusieurs trous d'évent (13) dont certains sont décalés axialement.

3. Système de prise d'empreinte selon la revendication 2, **caractérisé en ce que** certains trous d'évent (13) sont situés au-delà du moignon (5) et d'autres sont situés au niveau du moignon, au cours de la prise d'empreinte.

4. Système de prise d'empreinte selon l'une des revendications 1 à 3, **caractérisé en ce que** le piston (10) et l'extrémité de la pièce tubulaire (7) permettant l'engagement de celui-ci comportant des moyens complémentaires, par exemple un système de nervures-rainures (9, 12), permettant un blocage axial du piston (10) vis-à-vis de la pièce tubulaire (7), respectivement en début et en fin d'introduction du piston (10) dans la pièce tubulaire (7).

5. Système de prise d'empreinte selon l'une des revendications 1 à 4, **caractérisé en ce que** l'extrémité (8) de la pièce tubulaire est destinée à venir s'adapter à la base du moignon, et la pièce tubulaire est munie de moyens de fixation par clipage (11a, 11 b) sur le moignon.

6. Système de prise d'empreinte selon l'une des revendications 1 à 5, **caractérisé en ce que** la hauteur de la pièce tubulaire (7) est au moins égale à la hauteur de la partie du moignon (5) dépassant de la partie de l'implant fixée dans l'os augmentée de la course du piston (10).

7. Système de prise d'empreinte selon l'une des revendications 1 à 6, **caractérisé en ce que** la pièce tubulaire (7) est réalisée en un matériau sur lequel n'adhère pas le matériau (14) de prise d'empreinte, notamment en poly-méthyl-métacrylate si le matériau de prise d'empreinte est à base de silicone.
